# EUROPÄISCHE PATENTSCHRIFT

(11) **EP 2 603 396 B1**
(45) Veröffentlichungstag und Bekanntmachung des Hinweises auf die Patenterteilung: **19.04.2017**
(21) Anmeldenummer: 11755253.9
(22) Anmeldetag: 10.08.2011
(51) Int. Cl.: B60N 2/44, B60N 2/10, B60N 2/16

(54) **FAHRZEUGSITZ MIT VERSTELLVORRICHTUNG**
VEHICLE SEAT WITH AN ADJUSTER DEVICE
SIEGE DE VEHICULE AVEC UN DISPOSITIF DE DEPLACEMENT

(30) Priorität: 10.08.2010 DE 102010033957
(43) Veröffentlichungstag der Anmeldung: 19.06.2013
(73) Patentinhaber: Johnson Controls GmbH, 51399 Burscheid (DE)
(72) Erfinder: HAIDA, Stefan, 42855 Remscheid (DE); SCHULZ, Dirk, 42899 Remscheid (DE); FINNER, Holger, 42499 Hückeswagen (DE); PAWLOWSKI, Adrian, 50767 Köln (DE); JAKOB, Patrick, 41352 Korschenbroich (DE)
(74) Vertreter: Wolff, Felix
(86) Internationale Anmeldenummer: PCT/EP2011/004004
(87) Internationale Veröffentlichungsnummer: WO 2012/019763

(56) Entgegenhaltungen:
- WO-A1-2010/009893
- DE-A1-102007 038 833

## Beschreibung

Die vorliegende Erfindung betrifft einen Fahrzeugsitz mit einer Verstellvorrichtung beispielsweise zur Höhen- und/oder Neigungsverstellung einer Sitzteilstruktur und/oder einer mit der Sitzteilstruktur verbundenen Rückenlehnenstruktur, wobei die Verstellvorrichtung an der Sitzteilstruktur befestigt ist.

Solche Fahrzeugsitze mit Verstellvorrichtungen sind im Stand der Technik allgemein bekannt und beispielsweise in den Druckschriften DE 10 2004 061 062 A1 und DE 10 2007 038 833 A1 offenbart. Nachteilig bei den bekannten Verstellvorrichtungen ist jedoch, dass deren Befestigung an einer Sitzteilstruktur meist aufwändige Befestigungsmittel erfordert, die eine vergleichsweise platzeinnehmende Bauform besitzen, und/oder dass Belastungen nur mangelhaft zwischen dem Fahrzeugsitz und der Verstellvorrichtung übertragen werden.

Ein gattungsgemässer Fahrzeugsitz ist aus dem Dokument WO2010/009893A1 bekannt.

Die Aufgabe der vorliegenden Erfindung ist es daher, einen Fahrzeugsitz mit einer Verstellvorrichtung insbesondere zur Höhen- und/oder Neigungsverstellung zur Verfügung zu stellen, die eine besonders vorteilhafte Lastübertragung zwischen Fahrzeugsitz und Verstellvorrichtung ermöglicht und gleichzeitig besonders bauraumkompakt und somit mit vergleichsweise geringem Materialaufwand herstellbar ist.

Diese Aufgabe wird gelöst durch einen Fahrzeugsitz, der eine Verstellvorrichtung aufweist, mit der die Sitzteilstruktur und/oder die Rückenlehne relativ zur Karosserie eines Fahrzeuges verstellbar ist, wobei die Verstellvorrichtung einen Bremsring aufweist, der Teil ein lösbaren Arretierung eines Verstellgetriebes ist und die Verstellvorrichtung ein Gehäuse aufweist und wobei an dem Bremsring ein Mittel, für eine form- und/oder kraftschlüssige Verbindung mit dem Gehäuse, vorgesehen ist.

Die vorliegende Erfindung betrifft einen Fahrzeugsitz mit einer Verstellvorrichtung, beispielsweise um den Fahrzeugsitz insgesamt in seiner Höhe und/oder die Sitzfläche in ihrer Neigung relativ zu der Karosserie des Fahrzeuges zu verstellen. Vorzugsweise handelt es sich bei dem Verstellmechanismus um einen sogenannten Pumpmechanismus. Weiterhin erfindungsgemäß weist der Fahrzeugsitz einen Bremsring auf, der Teil einer lösbaren Arretierung des Verstellgetriebes ist. Mit dieser Arretierung wird beispielsweise verhindert, dass bei einem Unfall Kräfte und/oder Drehmomente von dem Verstellgetriebe auf den Antrieb des Verstellmechanismus übertragen werden. Des Weiteren weist die Verstellvorrichtung des erfindungsgemäßen Fahrzeugsitzes ein Gehäuse auf, das insbesondere den Bremsring und/oder das Verstellgetriebe zumindest teilweise umgibt.

Dieses Gehäuse weist in der Regel auf einer Seite eine Öffnung auf, durch die das Verstellgetriebe mit dem Antrieb, beispielsweise einer Handhabe, insbesondere einem Rad oder einem Hebel, verbunden wird. Vorzugsweise ist das Gehäuse aus Kunststoff ausgebildet. Erfindungsgemäß ist nun vorgesehen, dass an dem Bremsring mindestens ein, vorzugsweise mehrere, insbesondere äquidistant zueinander angeordnete Mittel für eine form- und/oder kraftschlüssige Verbindung mit dem Gehäuse vorgesehen sind. Das Mittel wirkt mit einem komplementären Mittel, das an dem Gehäuse angeordnet ist, form- und/oder kraftschlüssig zusammen und verhindert zumindest teilweise eine Relativbewegung zwischen dem Gehäuse und dem Bremsring, vorzugsweise in axialer und/oder radialer Richtung. Vorzugsweise befindet sich das Mittel am Umfang des Bremsrings. Durch die erfindungsgemäße Ausführungsform ergibt sich eine besonders kompakte Bauweise der Verstellvorrichtung und dadurch ein geringerer Materialaufwand und/oder ein besserer Kraftfluss. Der Bremsring kann direkt an die Sitzteilstruktur und/oder die Rückenlehne angebunden werden, was die Lastübertragung verbessert. Vorzugsweise wird das Gehäuse werkzeuglos mit dem Bremsring, beispielsweise durch eine Schnappverbindung, insbesondere eine lösbare Schnappverbindung, verbunden.

Gemäß der vorliegenden Erfindung ist an dem Bremsring ein Mittel vorgesehen, mit dem der Bremsring lösbar an der Sitzteilstruktur oder der Rückenlehne befestigbar ist.

Die zu diesem Gegenstand der vorliegenden Erfindung gemachten Ausführungen gelten für den anderen Gegenstand der vorliegenden Erfindung gleichermaßen und umgekehrt.

Vorzugsweise ist das Mittel ein Gewinde, das mit einem Gegengewinde, insbesondere einer Mutter, zusammenwirkt. Vorzugsweise handelt es sich um ein Außengewinde. Vorzugsweise wird das Gewinde des Bremsrings durch eine Öffnung in der Sitzteilstruktur und/oder in der Rückenlehne gesteckt und dann eine Mutter auf das Gewinde aufgeschraubt.

Die folgenden Ausführungen gelten für beide Gegenstände der vorliegenden Erfindung gleichermaßen.

Vorzugsweise ist das Mittel, das an dem Bremsring vorgesehen ist und das mit einem komplementären Mittel an dem Gehäuse zusammenwirkt, eine Ein- und/oder Ausbuchtung. Das Mittel ist bevorzugt als Befestigungsflansch ausgebildet, wobei der Befestigungsflansch vorzugsweise eine Ausnehmung aufweist, die von einem Befestigungselement, insbesondere von einer Schraube oder Niete, durchgriffen werden kann. Ebenso ist es denkbar, dass das Mittel eine Befestigungsnut und/oder ein Befestigungskeil ist.

In einer bevorzugten Ausführungsform weist der Bremsring ein Ausrichtungsmittel auf, das mit der Sitzteilstruktur oder der Rückenlehne zusammenwirkt und den Bremsring in seiner Lage relativ zu dieser festlegt. Diese Ausführungsform hat insbesondere den Vorteil, dass sich der Bremsring in einer eindeutigen Lage befindet, bevor er mit der Sitzteilstruktur und/oder der Rückenlehne verbunden wird. Bei einem nicht zur Erfindung gehörenden Ausführungsbeispiel wird der Bremsring stoffschlüssig, insbesondere durch Schweißen, ganz besonders bevorzugt durch Laserschweißen, mit der Sitzteilstruktur oder der Rückenlehne verbunden. Bei einem nicht zur Erfindung gehörenden Ausführungsbeispiel ist der Bremsring zumindest teilweise einstückig mit der Sitzteilstruktur, insbesondere dem Sitzseitenteil und/oder der Rückenlehne vorgesehen. Beispielsweise kann der Bremsring in ein Seitenteil des Sitzteils oder der Rückenlehne eingeformt werden.

Vorzugsweise ist die Verstellvorrichtung eine Sitzstrukturteilhöhen- und/oder Sitzstrukturteilneigungsverstellung.

Ausführungsbeispiele der Erfindung sind in den Figuren dargestellt und in der nachfolgenden Beschreibung näher erläutert. Diese Erläuterungen sind lediglich beispielhaft und schränken den allgemeinen Erfindungsgedanken nicht ein. Die Ausführungen gelten für alle Gegenstände der vorliegenden Erfindung gleichermaßen. Es zeigen
**Fig. 1, 2** schematische Darstellungen einer ersten Ausführungsform der erfindungsgemäßen Verstellvorrichtung in zwei verschiedenen Ansichten,
**Fig. 3, 4** schematische Darstellungen einer zweiten Ausführungsform der erfindungsgemäßen Verstellvorrichtung in zwei verschiedenen Ansichten,
**Fig. 5, 6, 7** schematische Darstellungen einer dritten Ausführungsform der erfindungsgemäßen Verstellvorrichtung in drei verschiedenen Ansichten,
**Fig. 8** eine schematische Seitenansicht eines erfindungsgemäßen Fahrzeugsitzes.

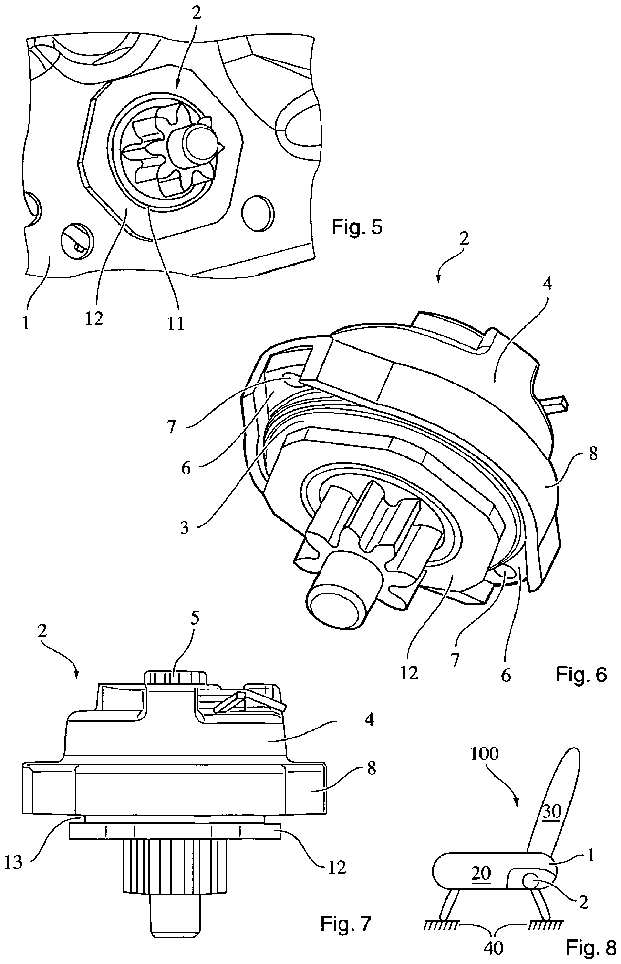

In **Fig. 8** ist ein erfindungsgemäßer Fahrzeugsitz 100 gezeigt, der eine Sitzteilstruktur 20, eine Rückenlehne 30 und einen Sitzunterbau 40, insbesondere eine Karosserie 40, aufweist. Die Sitzteilstruktur 20 umfasst ein Sitzseitenteil 1, an dem eine erfindungsgemäße Verstellvorrichtung 2 hier zur Höhen- und/oder Neigungsverstellung der Sitzteilstruktur 20 und/oder der Rückenlehne 30 befestigt ist.

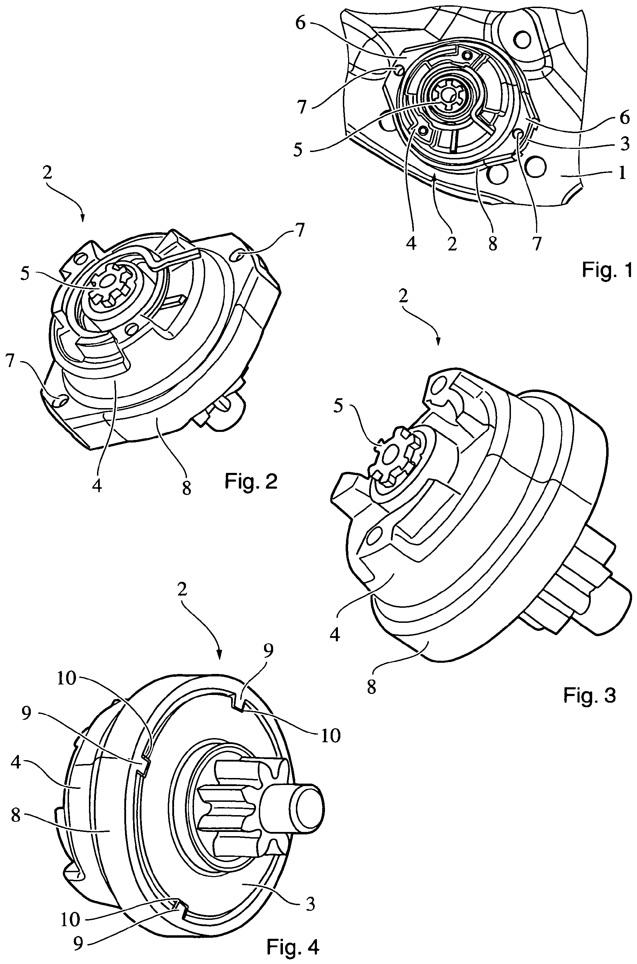

In **Fig. 1** ist schematisch eine 3D-Ansicht einer ersten Ausführungsform einer erfindungsgemäßen Verstellvorrichtung 2, welche von außen an einem Sitzseitenteil 1 eines Fahrzeugsitzes 100 befestigt ist. Die Verstellvorrichtung 2 besteht aus einem Bremsring 3, welcher flächenparallel zum Sitzseitenteil 1 verläuft, und einem auf dem Bremsring 3 angeordneten Gehäuse 4, welches ein Verstellgetriebe 5 hier zur Höhen- und/oder Neigungsverstellung der Sitzteilstruktur 20 und/oder der Rückenlehne 30 umgrenzt. Der Bremsring 3 umfasst, insbesondere einstückig, einen Befestigungsflansch 6, welcher Ausnehmungen 7 aufweist, die von nicht gezeigten Befestigungselementen, beispielsweise von Schrauben oder Nieten, durchgriffen werden können. Der Flansch 6 wirkt mit dem Gehäuse 4 form- und/der kraftschlüssig zusammen und verhindert dadurch zumindest im Wesentlichen eine Relativbewegung zwischen dem Bremsring und dem Gehäuse, insbesondere in axialer und/oder radialer Richtung. Bevorzugt weist das Gehäuse 4 ebenfalls entsprechende Ausnehmungen auf, die ebenfalls von den Befestigungsmitteln durchgriffen werden, so dass eine kraftschlüssige Verbindung zwischen dem Bremsring 3 und dem Gehäuse 4 sowohl in axiale als auch in radiale Richtung herstellbar ist. Somit ist es möglich, den Bremsring 3 auf vorteilhafte Weise gegen Verdrehungen und axiale Bewegungen gegenüber dem Gehäuse 4 zu sichern. Der Fachmann versteht, dass der Bremsring auch einstückig mit der Sitzteilstruktur, insbesondere dem Seitenteil 1 des Rahmens des Sitzteils, vorgesehen werden kann oder der Bremsring stoffschlüssig mit der Sitzteilstruktur verbinden kann. Wie in **Fig. 2** und insbesondere in **Fig. 6** erkennbar ist, weist das Gehäuse 4 ferner eine Mantelfläche 8 auf, die den Bremsring 3 zumindest abschnittsweise formschlüssig umgrenzt und somit zusätzlich, beispielsweise gegen Verdrehung, sichert. Bevorzugt ist weiterhin vorgesehen, dass auch das Sitzseitenteil 1 Ausnehmungen aufweist, die eine Anbindung des Bremsrings 3 mittels der Befestigungselemente an das Sitzseitenteil 1 ermöglichen. Dadurch ist es in besonders einfacher Weise möglich, eine Verdrehsicherung und/oder Axialsicherung der gesamten Verstellvorrichtung 2 gegenüber dem Sitzseitenteil 1 zu realisieren.

**Fig. 3** zeigt schematisch eine 3D-Ansicht einer zweiten Ausführungsform der erfindungsgemäßen Verstellvorrichtung 2, wobei der Bremsring 3 und das Gehäuse 4 in axialer Richtung eine kreisförmige Querschnittsfläche aufweisen und der Bremsring 3 von einer ringförmigen Mantelfläche 8 des Gehäuses 4 zumindest teilweise umgrenzt wird. Wie in **Fig. 4** ersichtlich, umfasst das Gehäuse 4 mehrere Befestigungskeile 9, die formschlüssig in an der Unterseite des Bremsrings 3 ausgebildete Nuten 10 greifen und somit eine Verdrehsicherung zwischen dem Gehäuse 4 und dem Bremsring 3 bewirken. Für die zweite Ausführungsform der Verstellvorrichtung 2 ist es vorgesehen, dass der Bremsring 3 mittels einer Schweißverbindung, beispielsweise durch Laserschweißen, am Sitzseitenteil 1 angebunden wird, so dass eine besonders robuste und kompakte Verbindung zwischen der Verstellvorrichtung 2 und dem Sitzseitenteil 1 hergestellt wird. Zur Positionierung des Bremsrings 3 relativ zum Sitzseitenteil 1 ist es bevorzugt vorgesehen, dass der Bremsring 3 nicht dargestellte Orientierungsmittel aufweist, wobei die Orientierungsmittel beispielsweise als Zapfen ausgebildet sind, die in Positionierungslöcher des Sitzseitenteils 1 greifen. Das Gehäuse wird vorzugsweise per Schnellverschluss mit dem Bremsring verbunden.

**Fig. 5** zeigt schematisch eine 3D-Ansicht einer dritten Ausführungsform der Verstellvorrichtung 2 auf der nach innen weisenden Seite des Sitzseitenteils 1, wobei ein in der Figur nicht sichtbarer Durchbruch des Sitzseitenteils 1 von einem Gewindeflansch 11 des Bremsrings 3 durchgriffen wird. Der Gewindeflansch 11 weist ein Außengewinde auf, auf welches eine Mutter 12 geschraubt werden kann, um eine kraftschlüssige Verbindung zwischen dem Sitzseitenteil 1 und dem Bremsring 3 herzustellen. In der in **Fig. 7** dargestellten Seitenansicht der Verstellvorrichtung 2 ist deutlich der zwischen der Mutter 12 und dem Bremsring 3 gebildete Klemmspalt 13 erkennbar, in dem das Sitzseitenteil 1 eingeklemmt wird. Der Bremsring 3 wird somit auf einfache Weise gegen Verdrehungen und axiale Bewegungen gegenüber dem Sitzseitenteil 1 gesichert. Wie in **Fig. 6** erkennbar, weist der Bremsring 3 ferner vorzugsweise einen Befestigungsflansch 6 gemäß der in **Fig. 1, 2** dargestellten Ausführungsform auf, so dass auch eine stabile Anbindung des Gehäuses 4 an den Bremsring 3 ermöglicht wird. Dadurch wird eine vorteilhafte Verdrehsicherung und Axialsicherung der gesamten Verstellvorrichtung 2 gegenüber dem Sitzseitenteil 1 gewährleistet.

Es versteht sich für den Fachmann, dass die in den drei Ausführungsformen beschriebenen Sicherungsmittel zur Verdrehsicherung und Axialsicherung des Bremsrings 3 gegenüber dem Gehäuse 4 und/oder gegenüber dem Sitzseitenteil 1 in vorteilhafter Weise beliebig miteinander kombiniert werden können.

### Bezugszeichenliste

- 1: Sitzseitenteil
- 2: Verstellvorrichtung
- 3: Bremsring
- 4: Gehäuse
- 5: Verstellgetriebe
- 6: Befestigungsflansch
- 7: Ausnehmungen
- 8: Mantelfläche
- 9: Befestigungskeile
- 10: Nuten
- 11: Gewindeflansch
- 12: Gegengewinde, Mutter
- 13: Klemmspalt
- 20: Sitzteilstruktur
- 30: Rückenlehne
- 40: Sitzunterbau, Fahrzeugkarosserie
- 100: Fahrzeugsitz

## Patentansprüche

1. Fahrzeugsitz (100), der eine Verstellvorrichtung (2) aufweist, mit der die Sitzteilstruktur (20) und/oder die Rückenlehne (30) relativ zur Karosserie (40) eines Fahrzeuges verstellbar ist, wobei die Verstellvorrichtung einen Antrieb und ein Verstellgetriebe (5) und einen Bremsring (3) aufweist, der Teil einer lösbaren Arretierung des Verstellgetriebes (5) ist und mit dem verhindert wird, dass bei einem Unfall Kräfte und/oder Drehmomente von dem Verstellgetriebe auf den Antrieb übertragen werden und wobei die Verstellvorrichtung ein Gehäuse (4) aufweist und an dem Bremsring (3) ein Mittel (6, 10) für eine form- und/oder kraftschlüssige Verbindung mit dem Gehäuse (4) vorgesehen ist, **dadurch gekennzeichnet, dass** an dem Bremsring ein Mittel (11) vorgesehen ist, mit dem der Bremsring lösbar an der Sitzteilstruktur (20) oder der Rückenlehne (30) befestigbar ist.

2. Fahrzeugsitz nach Anspruch 1, **dadurch gekennzeichnet, dass** das Mittel (11) ein Gewinde ist, das mit einem Gegengewinde (12), insbesondere einer Mutter, zusammenwirkt.

3. Fahrzeugsitz nach einem der voranstehenden Ansprüche, **dadurch gekennzeichnet, dass** das Mittel (6, 10) eine Ein- und/oder Ausbuchtung ist.

4. Fahrzeugsitz nach einem der voranstehenden Ansprüche, **dadurch gekennzeichnet, dass** der Bremsring (3) ein Ausrichtungsmittel aufweist, das mit der Sitzteilstruktur (20) oder der Rückenlehne (30) zusammenwirkt und den Bremsring in seiner Lage festlegt.

5. Fahrzeugsitz nach einem der voranstehenden Ansprüche, **dadurch gekennzeichnet, dass** die Verstellvorrichtung (2) eine Sitzstrukturteilhöhen- und/oder Sitzstrukturteilneigungsverstellung ist.

## Claims

1. Vehicle seat (100) which has an adjusting device (2) by means of which the seat part structure (20) and/or the backrest (30) is adjustable relative to the body (40) of a vehicle, wherein the adjusting device has a drive and an adjusting gear (5) and a braking ring (3) which is part of a releasable locking mechanism of the adjusting gear (5) and by which it is prevented that, in the event of an accident, forces and/or torques are transmitted from the adjusting gear to the drive and wherein the adjusting device has a housing (4) and a means (6, 10) for a positive and/or non-positive connection to the housing (4) is provided on the braking ring (3), **characterized in that** there is provided on the braking ring a means (11) by which the braking ring can be releasibly fastened to the seat part structure (20) or the backrest (30).

2. Vehicle seat according to Claim 1, **characterized in that** the means (11) is a thread which interacts with a mating thread (12), in particular of a nut.

3. Vehicle seat according to one of the preceding claims, **characterized in that** the means (6, 10) is an indentation and/or protuberance.

4. Vehicle seat according to one of the preceding claims, **characterized in that** the braking ring (3) has an aligning means which interacts with the seat part structure (20) or the backrest (30) and fixes the braking ring in its position.

5. Vehicle seat according to one of the preceding claims, **characterized in that** the adjusting device (2) is a seat structure part height adjuster and/or seat structure part tilt adjuster.

## Revendications

1. Siège de véhicule (100) qui présente un dispositif de réglage (2) avec lequel la structure de la partie de siège (20) et/ou le dossier (30) peuvent être réglés par rapport à la carrosserie (40) d'un véhicule, le dispositif de réglage présentant un entraînement et un engrenage de réglage (5) et une bague de freinage (3) qui fait partie d'un blocage amovible de l'engrenage de réglage (5) et avec laquelle on évite qu'en cas d'accident, des forces et/ou des couples soient transmis depuis l'engrenage de réglage à l'entraînement, et le dispositif de réglage présentant un boîtier (4) et un moyen (6, 10) étant prévu sur la bague de freinage (3) pour une connexion par engagement par correspondance de formes et/ou par force avec le boîtier (4), **caractérisé en ce que** sur la bague de freinage est prévu un moyen (11) avec lequel la bague de freinage peut être fixée de manière amovible à la structure de la partie de siège (20) ou au dossier (30).

2. Siège de véhicule selon la revendication 1, **caractérisé en ce que** le moyen (11) est un filetage qui coopère avec un filetage conjugué (12), en particulier un écrou.

3. Siège de véhicule selon l'une quelconque des revendications précédentes, **caractérisé en ce que** le moyen (6, 10) est un renfoncement et/ou un renflement.

4. Siège de véhicule selon l'une quelconque des revendications précédentes, **caractérisé en ce que** la bague de freinage (3) présente un moyen d'alignement qui coopère avec la structure de la partie de siège (20) ou avec le dossier (30) et qui fixe la bague de freinage en position.

5. Siège de véhicule selon l'une quelconque des revendications précédentes, **caractérisé en ce que** le dispositif de réglage (2) est un réglage de la hauteur de la partie de la structure de siège et/ou de l'inclinaison de la partie de la structure de siège.
